# EUROPÄISCHE PATENTSCHRIFT

(11) **EP 2 511 585 B1**
(45) Veröffentlichungstag und Bekanntmachung des Hinweises auf die Patenterteilung: **18.11.2015**
(21) Anmeldenummer: 12000892.5
(22) Anmeldetag: 10.02.2012
(51) Int. Cl.: F16L 55/115, F16L 55/11

(54) **Verschlusselement für Rohrstutzen**
Closing element for pipe ends
Elément de fermeture pour embouts de tuyau

(30) Priorität: 11.04.2011 DE 102011016736
(43) Veröffentlichungstag der Anmeldung: 17.10.2012
(73) Patentinhaber: VERITAS AG, 63571 Gelnhausen (DE)
(72) Erfinder: Gutgesell, Ralf, 36381 Schlüchtern (DE); Hartmann, Thomas, 63571 Gelnhausen (DE); Thomson, Stuart, Forton, Preston Lancashire PR3 1DR (GB)
(74) Vertreter: Klinski, Robert

(56) Entgegenhaltungen:
- WO-A1-2007/147204
- AU-B2- 578 667
- GB-A- 2 321 041
- US-A- 3 807 457
- US-A- 4 046 168
- US-B1- 6 176 267

## Beschreibung

Die Erfindung betrifft ein Verschlusselement für Rohrstutzen.

Als Rohrstutzen wird im Sinne der Erfindung der Endabschnitt einer beliebigen Leitung, insbesondere einer Kraftstoffleitung, bezeichnet. Die Leitung kann flexibel oder starr, aus einer oder mehreren Schichten, aus beliebigen Materialien, insbesondere aus Kunststoff und/oder Metall, ausgebildet sein.

Verschlusselemente dieser Art sind beispielsweise aus der DE 10 2008 018 136 A bekannt. Diese Verschlusselemente umfassen einen im Wesentlichen zylindrischen Verschlusskörper und ein daran angeordnetes Halteelement, wobei die Verschlusselemente eine bezogen auf das jeweils in der zu verschließenden Leitung transportierte Medium gesonderte Farbgebung aufweisen.

Demnach sind für unterschiedliche Rohrstutzen jeweils unterschiedliche Verschlusselemente zu verwenden, wobei eine Vertauschung der Verschlusselemente durch die gesonderte Farbgebung verhindert werden soll. Diese Lösung erfordert einen hohen fertigungstechnischen und logistischen Aufwand.

US 3 807 457 A1 zeigt den Oberbegriff von Anspruch 1.

Der Erfindung liegt die Aufgabe zugrunde, eine Vertauschung von Verschlusselementen für unterschiedliche Rohrstutzen zu verhindern, aber die Kosten bei der Herstellung von Verschlusselementen deutlich zu verringern.

Um die der Erfindung zugrunde liegende Aufgabe zu lösen, wird ein Verschlusselement für wenigstens zwei unterschiedlich dimensionierte Rohrstutzen nach Anspruch 1 bereit gestellt, umfassend einen Einsteckabschnitt, der in den ersten Rohrstutzen einsteckbar ist, einen Aufsteckabschnitt, der auf den zweiten Rohrstutzen aufsteckbar ist, und wenigstens einen Abstützabschnitt, welcher einen Außenumfang des mit dem Verschlusselement steckverbundenen ersten Rohrstutzens oder einen Innenumfang des mit dem Verschlusselement steckverbundenen zweiten Rohrstutzens abstützt. Das Verschlusselement wird durch Einstecken des Einsteckabschnitts in den ersten Rohrstutzen oder durch Aufstecken des Aufsteckabschnitts auf den zweiten Rohrstutzen mit dem jeweiligen Rohrstutzen steckverbunden. Abstützen bedeutet, dass sich der Abstützabschnitt mit dem Außenumfang des mit dem Verschlusselement steckverbundenen ersten Rohrstutzens oder mit dem Innenumfang des mit dem Verschlusselement steckverbundenen zweiten Rohrstutzens mittelbar oder unmittelbar in Kontakt befindet. Dieses Verschlusselement kann auf beiden unterschiedlich dimensionierten Rohrstutzen kippfest gesichert werden und die Rohrstutzen bestimmungsgemäß gegen Verstauben oder Verkratzen schützen. Somit ist für die zwei unterschiedlich dimensionierten Rohrstutzen nur noch ein erfindungsgemäßes Verschlusselement erforderlich. Dadurch kann eine Vertauschung der Verschlusselemente verhindert werden. Durch Erhöhung der Stückzahlen können die Kosten bei der Herstellung der bestimmungsgemäßen Verschlusselemente deutlich reduziert werden. In einer Einsteckposition des ersten Rohrstutzens wird das Verschlusselement am Innenumfang durch den Einsteckabschnitt und am Außenumfang beispielsweise durch den Abstützabschnitt abgestützt, wohingegen das Verschlusselement in einer Einsteckposition des zweiten Rohrstutzens beispielsweise nur am Außenumfang durch den Aufsteckabschnitt abgestützt ist, der sich vorzugsweise über mehr als die Hälfte der axialen Länge des Verschlusselements in Anlage am Außenumfang des zweiten Rohrstutzens befindet. Diverse Abwandlungen sind möglich. Das erfindungsgemäße Verschlusselement ist vorzugsweise lösbar/abnehmbar mit den zwei unterschiedlich dimensionierten Rohrstutzen verbindbar. Die Rohrstutzen weisen unterschiedliche Außendurchmesser und/oder unterschiedliche Innendurchmesser auf, wobei der erste Rohrstutzen vorzugsweise einen kleineren Außendurchmesser und/oder einen kleineren Innendurchmesser aufweist als der zweite Rohrstutzen. Vorzugsweise ist der Außendurchmesser des ersten Rohrstutzens kleiner als oder gleich groß wie der Innendurchmesser des zweiten Rohrstutzens. Es kann sich aber auch als nützlich erweisen, wenn die radialen Vorsprünge unterschiedliche Außendurchmesser und/oder unterschiedliche Innendurchmesser aufweisen und/oder unterschiedlich weit von dem Ende des jeweiligen Rohrstutzens beabstandet sind. Bei diesen Ausführungen kommen die Vorteile des erfindungsgemäßen Verschlusselements besonders gut zur Geltung.

Ein radialer Vorsprung des ersten Rohrstutzens und/oder ein radialer Vorsprung des zweiten Rohrstutzens mit dem Abstützabschnitt formschlüssig festlegbar, wobei der radiale Vorsprung als Erhebung am Innenumfang oder am Außenumfang des Rohrstutzens ausgebildet ist, wobei der radiale Vorsprung bevorzugt durch eine Ringnut oder als Ringwulst ausgebildet ist. Derartige Hinterschneidungen sind besonders gut geeignet, um das Verschlusselement unverlierbar - im Sinne von nicht unbeabsichtigt lösbar - an den Rohrstutzen zu sichern.

Es kann von Vorteil sein, wenn der radiale Vorsprung des ersten Rohrstutzens und/oder der radiale Vorsprung des zweiten Rohrstutzens formschlüssig an dem Verschlusselement, vorzugsweise an dem Abstützabschnitt, verrastbar ist, oder umgekehrt. Dadurch kann das Verschlusselement besonders sicher an dem ersten Rohrstutzen und/oder an dem zweiten Rohrstutzen festgelegt werden.

In einer vorteilhaften Weiterbildung der Erfindung weist der Einsteckabschnitt und/oder der Aufsteckabschnitt und/oder der Abstützabschnitt eine Vielzahl von Halterippen auf, wobei die Halterippen vorzugsweise radial in Richtung des zugeordneten Rohrstutzens vorstehen und/oder parallel zur Achse des Verschlusselements verlaufen und/oder in regelmäßigen Winkelabständen zueinander angeordnet sind, wobei die Halterippen des Einsteckabschnitts bevorzugt um regelmäßige Winkelabstände versetzt zu den Halterippen des Aufsteckabschnitts und/oder den Halterippen des Abstützabschnitts angeordnet sind. Die Halterippen sind vorzugsweise federnd ausgebildet. Dadurch kann das Verschlusselement besonders kippsicher bzw. spielfrei am ersten Rohrstutzen und/oder am zweiten Rohrstutzen gesichert werden. Überdies können Klappergeräusche oder Beschädigungen des ersten und/oder des zweiten Rohrstutzens durch derartige Halterippen verhindert werden.

Es kann sich als praktisch erweisen, wenn der Einsteckabschnitt von einem verschlossenen Ende des Verschlusselements vorzugsweise in Richtung eines offenen Endes des Verschlusselements hervorsteht. In dieser Ausführung können die Rohrstutzen besonders tief in das Verschlusselement eingesteckt werden, so dass das Verschlusselement besonders kompakt angeordnet werden kann und sich der erforderliche Raumbedarf verringert.

Es kann sich als sinnvoll erweisen, wenn der Aufsteckabschnitt den Einsteckabschnitt in Achsrichtung des Verschlusselements zumindest abschnittsweise überlappt. Auch diese Ausführung trägt dazu bei, dass die axiale Länge des Verschlusselements verkürzt werden kann und das Verschlusselement besonders kompakt ausgebildet werden kann.

Es kann sich als günstig erweisen, wenn der Querschnitt des Einsteckabschnitts über eine bestimmte axiale Länge des Verschlusselements konstant ist und/oder sich über eine bestimmte axiale Länge entgegen der Achsrichtung des Verschlusselements zum freien Ende hin verjüngt. Der axiale Längenbereich mit konstantem Querschnitt des Einsteckabschnitts erzeugt bei aufgestecktem Rohrstutzen vorzugsweise eine radial nach außen gerichtete Federkraft. Dadurch kann verhindert werden, dass sich das Verschlusselement infolge einer Komponente der Federkraft in Achsrichtung des Verschlusselements unbeabsichtigt vom Rohrstutzen löst.

Es kann sich als hilfreich erweisen, wenn der Einsteckabschnitt im Querschnitt gesehen im Wesentlichen sternförmig ausgebildet ist und/oder der Aufsteckabschnitt im Wesentlichen zylindrisch ausgebildet ist. Diese Gestaltungsform ist besonders bevorzugt, um die Rohrstutzen in der jeweiligen Einsteckposition durch Federkraft zu beaufschlagen und um das Verschlusselement kraftschlüssig an den Rohrstutzen zu sichern.

In einer vorteilhaften Weiterbildung der Erfindung ist das Verschlusselement als Verschlusskappe und/oder als Verschlussstopfen ausgebildet, wobei das Verschlusselement die unterschiedlich dimensionierten Rohrstutzen vorzugsweise jeweils dichtend verschließt. Die Verschlusskappe und/oder der Verschlussstopfen können dadurch das Eindringen von Schmutz, Feuchtigkeit oder Flüssigkeiten in die unterschiedlich dimensionierten Rohrstutzen verhindern.

Weitere vorteilhafte Ausführungsformen ergeben sich durch beliebige Kombinationen der offenbarten Merkmale.

### Kurze Beschreibung der Figuren

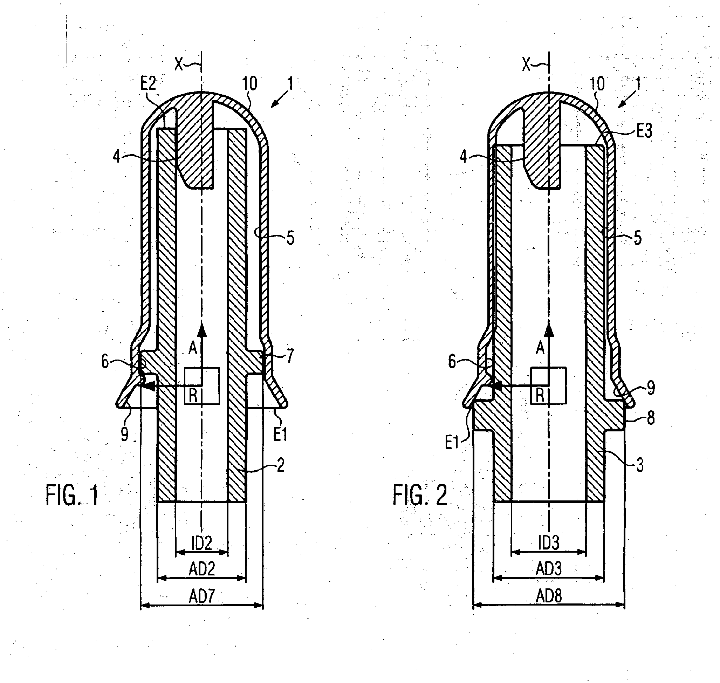

- Figur 1: zeigt eine schematische Schnittansicht einer erfindungsgemäßen Anordnung, umfassend ein Verschlusselement und einen ersten Rohrstutzen, wobei ein Einsteckabschnitt in den ersten Rohrstutzen eingesteckt ist und ein Abstützabschnitt eine Ringwulst am Außenumfang des ersten Rohrstutzens kraftschlüssig und formschlüssig festlegt.
- Figur 2: zeigt eine schematische Schnittansicht einer nicht erfindungsgemäßen Anordnung, umfassend ein Verschlusselement aus Figur 1 und einen zweiten Rohrstutzen, wobei der Aufsteckabschnitt auf den zweiten Rohrstutzen aufgesteckt ist und ein Anlageabschnitt an einer Ringwulst am Außenumfang des zweiten Rohrstutzens anliegt.

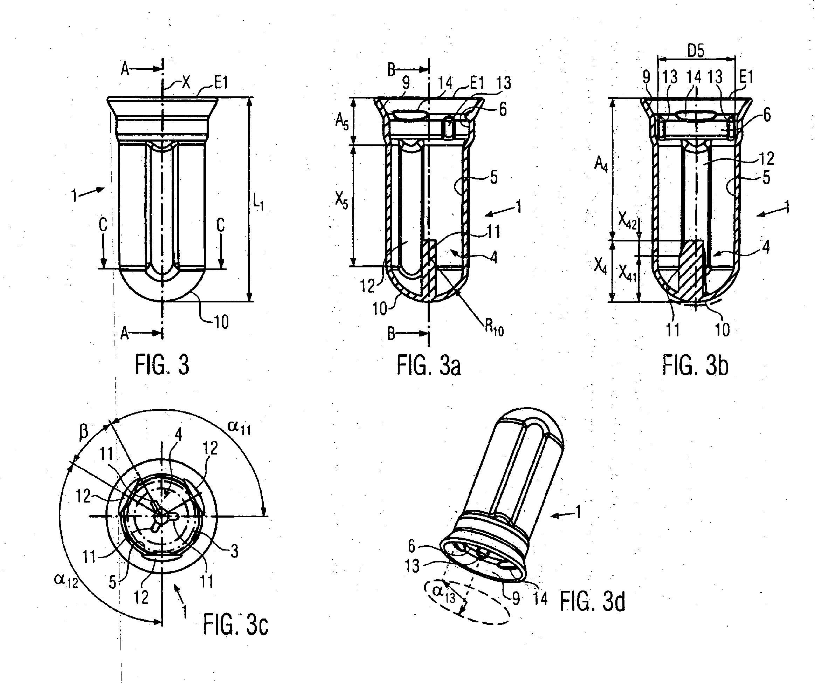

- Figur 3: zeigt eine Seitenansicht des erfindungsgemäßen Verschlusselementes aus Figur 1.
- Figur 3a: zeigt einen Schnitt A-A aus Figur 3.
- Figur 3b: zeigt einen Schnitt B-B aus Figur 3a.
- Figur 3c: zeigt einen Schnitt C-C aus Figur 3a.
- Figur 3d: zeigt eine perspektivische Ansicht des erfindungsgemäßen Verschlusselementes.

### Detaillierte Beschreibung der bevorzugten Ausführungsbeispiele

Der Aufbau und die Funktion des erfindungsgemäßen Verschlusselements 1 werden nachstehend mit Bezug auf die Zeichnungen im Detail beschrieben.

Das erfindungsgemäße Verschlusselement 1 ist als Verschlusskappe und/oder als Verschlussstopfen für zwei unterschiedlich dimensionierte Rohrstutzen 2, 3 ausgebildet, um die unterschiedlichen Rohrstutzen 2, 3 jeweils dichtend zu verschließen.

Im vorliegenden Fall sind die Rohrstutzen 2, 3 die Endabschnitte zweier Kraftstoffleitungen mit unterschiedlichen Abmessungen. Der erste Rohrstutzen 2 weist einen kleineren Außendurchmesser AD2 und einen kleineren Innendurchmesser ID2 auf als der zweite Rohrstutzen 3. Der Außendurchmesser AD7 der Ringwulst 7 des ersten Rohrstutzens 7 ist ebenfalls kleiner als der Außendurchmesser AD8 der Ringwulst 8 des zweiten Rohrstutzens 3, und die Ringwulst 8 des zweiten Rohrstutzens 3 ist weiter von dem Ende des jeweiligen Rohrstutzens 2, 3 beabstandet als die Ringwulst 7 des ersten Rohrstutzens 7.

Das Verschlusselement 1 umfasst einen Einsteckabschnitt 4 mit einem im Wesentlichen sternförmigen Querschnitt, der in den ersten Rohrstutzen 2 einsteckbar ist, einen im Wesentlichen zylindrischen Aufsteckabschnitt 5, der auf den zweiten Rohrstutzen 3 aufsteckbar ist, und einen im Wesentlichen zylindrischen oder ringnutfömigen Abstützabschnitt 6, mit welchem eine Ringwulst 7 am Außenumfang des ersten Rohrstutzens 2 kraftschlüssig festlegbar ist. In der vorliegenden Ausführung umfasst das Verschlusselement 1 zusätzlich eine Rasteinrichtung in Gestalt einer oder mehrerer Rastnasen 14, um die Ringwulst 7 durch Verrastung formschlüssig in dem Abstützabschnitt 6 zu sichern.

Der Einsteckabschnitt 4, der Aufsteckabschnitt 5 und der Abstützabschnitt 6 weisen jeweils eine Gruppe von drei federnden Halterippen 11, 12, 13 auf. Die Halterippen 11, 12, 13 verlaufen parallel zur Achse X des Verschlusselements 1 und stehen radial in Richtung des zugeordneten Rohrstutzens 2, 3 vor. Die Halterippen 11, 12, 13 sind jeweils innerhalb einer Gruppe in regelmäßigen Winkelabständen α11, α12, α13 von 120° zueinander angeordnet. Die Halterippen 11 des Einsteckabschnitts 4 sind zu den Halterippen 12 des Aufsteckabschnitts 5 und zu den Halterippen 13 des Abstützabschnitts 6 um regelmäßige Winkelabstände β (bzw. α11 - β, α12 - β , α13 - β) versetzt angeordnet, wobei der Winkel β vorzugsweise kleiner ist als die regelmäßigen Winkelabstände α11, α12, α13 innerhalb einer Gruppe.

Der Einsteckabschnitt 4 steht von einem verschlossenen, kuppelförmigen Ende 10 des Verschlusselements 1 entgegen der Achsrichtung A in Richtung eines offenen Endes E1 des Verschlusselements 1 in den Aufsteckabschnitt 5 hervor, so dass der Aufsteckabschnitt 5 den Einsteckabschnitt 4 in Achsrichtung A des Verschlusselements 1 zumindest abschnittsweise überlappt. Der sternförmige Querschnitt des Einsteckabschnitts 4 ist über die axiale Länge X41 entlang der Achse des Verschlusselements 1 konstant und verjüngt sich über die axiale Länge X42 entgegen der Achsrichtung A des Verschlusselements 1 zum freien Ende des Einsteckabschnitts 4 hin. Am offenen Ende E1 des Verschlusselements 1 bildet der schirmförmige oder konusförmige Anlageabschnitt 9 eine sich zum Ende E1 hin aufweitende Mündung, die das Einfädeln der Rohrstutzen 2, 3 beim Aufsetzen des Verschlusselements 1 erleichtert.

Die Dimensionen des Verschlusselements 1 sind in der vorliegenden Ausführung wie folgt:

Die Gesamtlänge L1 beträgt ca. 27,1 mm, die axiale Länge A5 vom offenen Ende E1 des Verschlusselements 1 bis zum Beginn des Aufsteckabschnitts 5 beträgt ca. 6,2 mm, die axiale Länge X5 des Aufsteckabschnitts 5 beträgt ca. 15 mm, die axiale Länge A4 vom offenen Ende E1 des Verschlusselements 1 bis zum freien Ende des Einsteckabschnitts 4 beträgt ca. 18,9 mm, die axiale Länge X4 des Einsteckabschnitts 4 beträgt ca. 7 mm, wobei die axiale Länge X41 des konstanten Querschnitts ca. 5 mm beträgt und die axiale Länge X42 des sich verjüngenden Querschnitts ca. 2 mm beträgt. Der Innendurchmesser D5 des Aufsteckabschnitts 5 beträgt ca. 10,5 mm, wobei der lichte Querschnitt zwischen den Halterippen 12 geringer als der Außendurchmesser AD3 des zweiten Rohrstutzens 3 ist. Der Außendurchmesser des Einsteckabschnitts 4 ist entsprechend etwas größer als der Innendurchmesser ID2 des ersten Rohrstutzens 2. Der Radius R10 des kuppelförmigen Endabschnitts 10 des Verschlusselements 1 liegt bei ca. 5,5 mm. Die Wandstärke des Verschlusselements 1 liegt bei ca. 0,7 mm. Der Außendurchmesser AD2 des ersten Rohrstutzens 2 liegt bei ca. 8 mm und der Außendurchmesser AD3 des zweiten Rohrstutzens 3 liegt bei ca. 10 mm. Bei einer Wandstärke von ca. 1,2 mm beträgt der Innendurchmesser ID2 des ersten Rohrstutzens 2 ca. 6,8 mm und der Innendurchmesser ID3 des zweiten Rohrstutzens 3 ca. 8,8 mm. Der Außendurchmesser AD7 der Ringwulst 7 liegt bei ca. 13 mm und der AD8 der Ringwulst 8 liegt bei ca. 15 mm.

Das Verschlusselement 1 ist vorzugsweise ein einstückiges, monolithisches Spritzgussbauteil aus Kunststoff, insbesondere aus Polypropylen (bevorzugt nach VDA 260). Der Anspritzpunkt befindet sich vorzugsweise außen am Scheitel des kuppelförmigen Endabschnitts 10 des Verschlusselements 1, wobei dieser Bereich vertieft oder erhaben ausgebildet sein kann. Das Material des Verschlusselements 1 weist vorzugsweise elastische und/oder flexible und/oder federnde Eigenschaften auf.

Die bevorzugte Anwendung des erfindungsgemäßen Verschlusselements 1 wird nachstehend mit Bezug auf die Zeichnungen im Detail beschrieben.

Um den ersten Rohrstutzen 2 mit dem erfindungsgemäßen Verschlusselement 1 zu verbinden und dichtend zu verschließen, wird zunächst das Ende E2 des ersten Rohrstutzens 2 in das offene Ende E1 des Verschlusselements 1 eingeführt und auf den Einsteckabschnitt 4 aufgesteckt. Die Verjüngung am Ende des Einsteckabschnitts 4 erleichtert dabei das Einfädeln des Einsteckabschnitts 4. Die sternförmige Anordnung der federnden Halterippen 11 verleiht dem Einsteckabschnitt 4 in radialer Richtung R federnde Eigenschaften. Beim Aufstecken des ersten Rohrstutzens 2 werden die Halterippen 11 radial nach innen verdrängt. In der dargestellten Einsteckposition halten die Halterippen 11 den ersten Rohrstutzen 2 kraftschlüssig, indem sie den ersten Rohrstutzen 2 von innen mit radial nach außen gerichteten Federkräften beaufschlagen. Um in die dargestellte Einsteckposition zu gelangen, muss die Ringwulst 7 die Rastnase 14 am Innenumfang des Verschlusselements 1 verdrängen, bis die Ringwulst 7 in der Einsteckposition hinter der Rastnase 14 einrastet und kraftschlüssig und/oder formschlüssig im Abstützabschnitt 6 gesichert ist. Dadurch wird das Verschlusselement 1 in der bestimmungsgemäßen Einsteckposition am Innenumfang durch den Einsteckabschnitt 4 abgestützt und am Außenumfang durch den Abstützabschnitt 6 abgestützt. Im Ergebnis ist das Verschlusselement 1 in der Einsteckposition kippfest und dichtend auf dem ersten Rohrstutzen 2 gesichert. Durch Abziehen in Achsrichtung A ist das Verschlusselement 1 wieder von dem ersten Rohrstutzen 2 lösbar und kann in der oben beschriebenen Weise erneut aufgesteckt werden.

Um den zweiten Rohrstutzen 3 mit dem erfindungsgemäßen Verschlusselement 1 zu verbinden und dichtend zu verschließen, wird zunächst das Ende E3 des zweiten Rohrstutzens 3 in das offene Ende E1 des Verschlusselements 1 eingeführt und in den Aufsteckabschnitt 5 eingesteckt. Der schirmförmige bzw. konusförmige Anlageabschnitt 9 erleichtert das Einfädeln des zweiten Rohrstutzens 3. Die nach innen vorstehenden Halterippen 12 verleihen dem Aufsteckabschnitt 5 in radialer Richtung R federnde Eigenschaften. Beim Einstecken des zweiten Rohrstutzens 3 werden die Halterippen 12 radial nach außen verdrängt. In der dargestellten Einsteckposition halten die Halterippen 12 den zweiten Rohrstutzen 3 kraftschlüssig, indem sie den zweiten Rohrstutzen 3 von außen mit radial nach innen gerichteten Federkräften beaufschlagen. In der dargestellten Einsteckposition erstreckt sich der Einsteckabschnitt 4 zumindest teilweise innerhalb des zweiten Rohrstutzens 3 und die Ringwulst 8 liegt am Innenumfang des Anlageabschnitts 9 an. Dadurch wird das Verschlusselement 1 in der bestimmungsgemäßen Einsteckposition kippfest und dichtend auf dem zweiten Rohrstutzen 3 gesichert. Durch Abziehen in Achsrichtung A ist das Verschlusselement 1 wieder von dem zweiten Rohrstutzen 3 lösbar und kann in der oben beschriebenen Weise erneut aufgesteckt werden.

Die erforderliche Kraft zum Abziehen und/oder Aufstecken des Verschlusselements 1 liegt vorzugsweise im Bereich von 10 bis 50 N, bevorzugt im Bereich von 20 bis 30 N, bevorzugt bei 24 N. Die Werte gelten für den ersten Rohrstutzen 2 und/oder für den zweiten Rohrstutzen 3.

Die Erfindung ist nicht auf das vorliegende Ausführungsbeispiel beschränkt. Vorteilhafte Weiterbildungen ergeben sich insbesondere durch beliebige Kombinationen der offenbarten Merkmale.

In einem besonders bevorzugten Ausführungsbeispiel ist das Verschlusselement 1 als Kombischutzkappe ausgebildet, die in der Lage ist z. B. einen Schutz von SAE Bördeln nach der Norm SAE J2044 (Stand: 13.08.2009) in der Dimension SAE J 7,89 mm für den ersten Rohrstutzen 2 und SAE J 9,89 mm für den zweiten Rohrstutzen 3 gegen Verkratzen und Verstauben zu gewährleisten. Ein Einsatz bei anderen Dimensionen und vor allem bei mehr als zwei unterschiedlich dimensionierten Stutzen ist ebenfalls machbar. Die Kombischutzkappe deckt mehrere Dimensionen von SAE Bördeln in Kombination als Einzelteil ab. Die Stützung in der Kappenspitze besteht aus einer Zentrierhilfe, die sich bei Montage in das Loch des zu schützenden Bauteils schiebt und so einen exakten Sitz der Kappe gegen Wackeln und damit verbundenes Lösen vom Stutzen gewährleistet (Transportsicherung). Bei dem zu sichernden Bauteil erfolgt die Haltefunktion zusätzlich über den Außenbereich des Rings hinter dem SAE Stutzen oder über eine formschlüssige Verrastung. Durch die Formgebung besteht die Möglichkeit, zwei unterschiedliche Dimensionen von SAE Bördeln mit einer Kappe zu schützen.

Vorteile und Anwendungsmöglichkeiten der Erfindung ergeben sich überall in der Industrie, wo zu schützende Bauteile ähnlicher Art zum Einsatz kommen können. Mit dieser Neuentwicklung ist es möglich, unterschiedliche Dimensionen mit einer Kappe abzudecken. Dies hat zur Folge, dass sich höhere Stückzahlen generieren lassen und die Herstellungskosten einer Kombischutzkappe etwa bei der Hälfte der Herstellungskosten einer herkömmlichen Einzelschutzkappe bewegen. Ein Vertauschen der herkömmlichen Einzelschutzkappen (z. B. Aufstecken einer Kappe für einen Bördel SAE J 9,89 mm auf einen Bördel SAE J 7,89 mm) ist mit der Kombischutzkappe ausgeschlossen.

## Patentansprüche

1. Anordnung, umfassend ein Verschlusselement (1) und wenigstens zwei unterschiedlich dimensionierte Rohrstutzen (2, 3), die unterschiedliche Außendurchmesser und/oder In-nenndurchmesser aufweisen, wobei das Verschlusselement (1) einen Einsteckabschnitt (4) umfasst, der in den ersten Rohrstutzen (2) einsteckbar ist, einen Aufsteckabschnitt (5), der auf den zweiten Rohrstutzens (3) aufsteckbar ist, und wenigstens einen Abstützabschnitt (6), welcher einen Außenumfang des mit dem Verschlusselement (1) steckverbundenen ersten Rohrstutzens (2) oder einen Innenumfang des mit dem Verschlusselement (1) steckverbundenen zweiten Rohrstutzens (3) abstutzt, **dadurch gekennzeichnet, dass** mit dem Abstützabschnitt (6) ein radialer Vorsprung (7) des ersten Rohrstutzens (2) und/oder ein radialer Vorsprung (8) des zweiten Rohrstutzens (3) formschlüssig festlegbar ist, wobei der radiale Vorsprung (7, 8) als Erhebung am Innenumfang oder am Außenumfang des Rohrstutzens (2, 3) ausgebildet ist.

2. Anordnung (1) nach Anspruch 1, **dadurch gekennzeichnet, dass** der radiale Vorsprung (7, 8) durch eine Ringwulst ausgebildet ist.

3. Anordnung nach zumindest einem der vorangehenden Ansprüche, **dadurch gekennzeichnet, dass** der radiale Vorsprung (7) des ersten Rohrstutzens (2) und/oder der radiale Vorsprung (8) des zweiten Rohrstutzens (3) formschlüssig an dem Verschlusselement (1) verrastbar ist, oder umgekehrt.

4. Anordnung nach zumindest einem der vorangehenden Ansprüche, **dadurch gekennzeichnet, dass** der Einsteckabschnitt (4) und/oder der Aufsteckabschnitt (5) und/oder der Abstützabschnitt (6) eine Vielzahl von Halterippen (11, 12, 13) aufweist, wobei die Halterippen (11, 12, 13) vorzugsweise radial in Richtung des zugeordneten Rohrstutzens (2, 3) vorstehen und/oder parallel zur Achse (X) des Verschlusselements (1) verlaufen und/oder in regelmäßigen Winkelabständen (α11, α12, α13) zueinander angeordnet sind, wobei die Halterippen (11) des Einsteckabschnitts (4) bevorzugt um regelmäßige Winkelabstände (β) versetzt zu den Halterippen (12) des Aufsteckabschnitts (5) und/oder den Halterippen (13) des Abstützabschnitts (6) angeordnet sind.

5. Anordnung nach zumindest einem der vorangehenden Ansprüche, **dadurch gekennzeichnet, dass** der Einsteckabschnitt (4) von einem verschlossenen Ende (10) des Verschlusselements (1) vorzugsweise in Richtung eines offenen Endes (E1) des Verschlusselements (1) hervorsteht.

6. Anordnung nach zumindest einem der vorangehenden Ansprüche **dadurch gekennzeichnet, dass** der Aufsteckabschnitt (5) den Einsteckabschnitt (4) in Achsrichtung (A) des Verschlusselements (1) zumindest abschnittsweise überlappt.

7. Anordnung nach zumindest einem der vorangehenden Ansprüche, **dadurch gekennzeichnet, dass** der Querschnitt des Einsteckabschnitts (4) über eine bestimmte axiale Länge (X41) des Verschlusselements (1) konstant ist und/oder sich über eine bestimmte axiale Länge (X42) entgegen der Achsrichtung (A) des Verschlusselements (1) zum freien Ende hin verjüngt.

8. Anordnung nach zumindest einem der vorangehenden Ansprüche, **dadurch gekennzeichnet, dass** der Einsteckabschnitt (4) im Querschnitt gesehen im Wesentlichen sternförmig ausgebildet ist und/oder der Aufsteckabschnitt (5) im Wesentlichen zylindrisch ausgebildet ist.

9. Anordnung nach zumindest einem der vorangehenden Ansprüche, **dadurch gekennzeichnet, dass** das Verschlusselement (1) als Verschlusskappe und/oder als Verschlussstopfen ausgebildet ist, wobei das Verschlusselement (1) die unterschiedlich dimensionierten Rohrstutzen (2, 3) vorzugsweise jeweils dichtend verschließt.

## Claims

1. An arrangement comprising a closing element (1) and at least two differently dimensioned pipe sockets (2, 3) exhibiting different outer diameters and/or inner diameters, wherein the closing element (1) comprises an insertion section (4) insertable into the first pipe socket (2), a mounting section (5) mountable on the second pipe socket (3), and at least one support section (6) which supports an outer circumference of the first pipe socket (2) connected into the closing element (1) or an inner circumference of the second pipe socket (3) connected into the closing element (1);
**characterized in that**
the support section (6) can positively fix a radial projection (7) of the first pipe socket (2) and/or a radial projection (8) of the second pipe socket (3), wherein the radial projection (7, 8) is configured as a protrusion on the inner circumference or on the outer circumference of the pipe socket (2, 3).

2. The arrangement (1) according to claim 1, **characterized in that** the radial projection (7, 8) is formed by an annular bead.

3. The arrangement according to at least one of the preceding claims, **characterized in that** the radial projection (7) of the first pipe socket (2) and/or the radial projection (8) of the second pipe socket (3) can be positively locked into position on the closing element (1) or vice versa.

4. The arrangement according to at least one of the preceding claims, **characterized in that** the insertion section (4) and/or the mounting section (5) and/or the support section (6) comprises a plurality of retaining ribs (11, 12, 13), wherein the retaining ribs (11, 12, 13) preferably project radially toward the associated pipe socket (2, 3) and/or run parallel to the axis (X) of the closing element (1) and/or are arranged at regular angular distances (α11, α12, α13) from one another, wherein the retaining ribs (11) of the insertion section (4) are preferentially arranged at regular angular distances (ß) offset from the retaining ribs (12) of the mounting section (5) and/or the retaining ribs (13) of the support section (6).

5. The arrangement according to at least one of the preceding claims, **characterized in that** the insertion section (4) projects from a closed end (10) of the closing element (1) preferably toward an open end (E1) of the closing element (1).

6. The arrangement according to at least one of the preceding claims, **characterized in that** the mounting section (5) at least partially overlaps the insertion section (4) in the axial direction (A) of the closing element (1).

7. The arrangement according to at least one of the preceding claims, **characterized in that** the cross section of the insertion section (4) is constant over a particular axial length (X41) of the closing element (1) and/or tapers over a particular axial length (X42) toward the free end opposite to the axial direction (A) of the closing element (1).

8. The arrangement according to at least one of the preceding claims, **characterized in that** the insertion section (4) is substantially star-shaped in cross section and/or the mounting section (5) is substantially of cylindrical design.

9. The arrangement according to at least one of the preceding claims, **characterized in that** the closing element (1) is designed as an end cap and/or closing plug, wherein the closing element (1) preferably tightly seals the respective differently dimensioned pipe sockets (2, 3).

## Revendications

1. Agencement, comprenant un élément de fermeture (1) et au moins deux tubulures (2, 3) de dimensions différentes qui présentent des diamètres extérieurs et/ou des diamètres intérieurs différents, l'élément de fermeture (1) comprenant une section d'insertion (4) pouvant être insérée dans la première tubulure (2), une section d'emmanchement (5) qui peut être emmanchée sur la seconde tubulure (3) et au moins une section de support (6) qui supporte une circonférence extérieure de la première tubulure (2) raccordée à l'élément de fermeture (1) ou une circonférence intérieure de la seconde tubulure (3) raccordée à l'élément de fermeture (1), **caractérisé en ce qu**'une section de support (6) permet de définir mécaniquement une saillie radiale (7) de la première tubulure (2) et/ou une saillie radiale (8) de la seconde tubulure (3) la saillie radiale (7, 8) étant formée en tant que protubérance sur la circonférence intérieure ou sur la circonférence extérieure de la tubulure (2, 3).

2. Agencement (1) selon la revendication 1, **caractérisé en ce que** la saillie radiale (7, 8) est formée par un renflement annulaire.

3. Agencement selon au moins une des revendications précédentes, **caractérisé en ce que** la saillie radiale (7) de la première tubulure (2) et/ou la saillie radiale (8) de la seconde tubulure (3) peut venir en prise mécanique dans l'élément de fermeture (1) ou inversement.

4. Agencement selon au moins une des revendications précédentes, **caractérisé en ce que** la section d'insertion (4) et/ou la section d'emmanchement (5) et/ou la section de support (6) présentent une multitude de nervures de retenue (11, 12, 13), lesdites nervures de retenue (11, 12, 13) faisant saillie de préférence radialement dans le sens de la tubulure associée (2, 3) et/ou s'étendant parallèlement à l'axe (X) de l'élément de fermeture (1) et/ou étant disposées l'une par rapport à l'autre à des distances angulaires régulières (α11, α12, α13), les nervures de retenue (11) de la section d'insertion (4) étant décalées de préférence en des distances angulaires régulières (ß) par rapport aux nervures de retenue (12) de la section d'emmanchement (5) et/ou aux nervures de retenue (13) de la section de support (6).

5. Agencement selon au moins une des revendications précédentes, **caractérisé en ce que** la section d'insertion (4) fait saillie depuis une extrémité fermée (10) de l'élément de fermeture (1) de préférence dans le sens d'une extrémité ouverte (E1) de l'élément de fermeture (1).

6. Agencement selon au moins une des revendications précédentes **caractérisé en ce que** la section d'emmanchement (5) chevauche au moins par certaines sections la section d'insertion (4) dans I sens de l'axe (A) de l'élément de fermeture (1).

7. Agencement selon au moins une des revendications précédentes, **caractérisé en ce que** la section transversale de la section d'insertion (4) est constante sur une longueur axiale définie (X41) de l'élément de fermeture (1) et/ou s'amincit sur une longueur axiale définie (X42) dans le sens contraire à l'axe (A) de l'élément de fermeture (1) vers l'extrémité libre.

8. Agencement selon au moins une des revendications précédentes, **caractérisé en ce que** la section d'insertion (4) vue en coupe est formée sensiblement en étoile et/ou la section d'emmanchement (5) est sensiblement cylindrique.

9. Agencement selon au moins une des revendications précédentes, **caractérisé en ce que** l'élément de fermeture (1) est conçu en tant que capuchon de fermeture et/ou en tant que bouchon de fermeture, l'élément de fermeture (1) fermant de préférence hermétiquement les tubulures (2, 3) hermétiques de dimensions différentes.
